# EUROPEAN PATENT APPLICATION

(11) **EP 1 950 679 A1**
(43) Date of publication of application: **30.07.2008**
(21) Application number: 08150376.5
(22) Date of filing: 17.01.2008
(51) Int. Cl.: G06F 21/20

(54) **Method for locking computer and device for the same**

(30) Priority: 19.01.2007 TW 96102239
(71) Applicant: Seco Technology Co., Ltd., Da-An District 106 Taipei City (TW)
(72) Inventor: Chung, Chi-Neng, 106, Taipei (TW)
(74) Representative: Skuhra, Udo

(57) **Abstract**

The method for locking a computer and a device for the same are provided. The proposed locking method for a computer includes steps of: (a) providing a detecting tool (825, 1024) to monitor a mode (80, 101-103); and (b) detecting a removal of the mode via the detecting tool (825, 1024) so as to lock the computer thereafter. The proposed computer having a locking function includes a detecting tool (825, 1024) detecting a triggering signal, and a receiving device (100) receiving the triggering signal and locking the computer accordingly.

## Description

The present invention relates to a device for locking a computer and a method thereof. More particularly, the present invention relates to the method for locking the first input device of a computer and then unlocking the same via a second input device.

In general, a user of a computer employs a keyboard for inputting a data. To prevent an unauthorized person from using the computer, controlling the keyboard to avoid the unauthorized usage is necessary. For example, the device and method disclosed in the US Application No. 11/895,943, by the same applicant as that of the present invention, can effectively interfere with the operations of the keyboard to achieve the purposes of avoiding the unauthorized usage of the keyboard and maintaining the continuous execution of the jobs setting to be accomplished by the computer. The performance for locking the computer of the '943 US Patent application is superior than that of the Windows software, which simply requires the registration of the secret code. Thus, the '943 US Patent application is suitable for quickly locking the computer in use for the occasions such as at crowded commercial places and for doctors who must leave their seats in a short-notice.

However, a bias-circuit is used in the proposed device of the above-mentioned '943 US Patent application, which either influences the manufacturing process of the existing hardware, or requires a new hardware to accomplish the control function, and results in higher manufacturing costs. Thus, the provided device and the controlling modes for locking the keyboard and the mouse provided in the '943 US Patent application can be further improved.

Keeping the drawbacks of the prior arts in mind, and employing experiments and research full-heartily and persistently, the applicant finally conceived a method for locking a computer and a device for the same.

It is therefore an object of the present invention to propose a method for managing a first input device of a computer and the device for the same so as to overcome the drawbacks of using the bias circuit in the provided device for locking the keyboard of a computer in the prior art, to cause the management of the keyboard more convenient and to accomplish the identification process adapted to the operations of the relative hardware.

It is therefore another object of the present invention to propose a method for locking a computer and the device for the same so as to avoid using the technology of multiple hardware identification in setting up the hardware one by one such that the management of the computer is much more convenient.

According to the first aspect of the present invention, a locking method for a computer includes steps of: (a) providing a detecting tool to monitor a mode; and (b) detecting a removal of the mode via the detecting tool so as to lock the computer thereafter.

Preferably, the locking method further includes a step of: (c) displaying the upper frame so as to cover the previous frame triggered by the first input device and having a function table with a non-beginning item and an exchanging program table with a non-hot key via the input blocking program, wherein the detection tool is an input blocking program, the computer is locked via locking a first input device of the computer, the first input device is a network card, the mode is a USB mouse, and the input blocking program changes a reading data of the registration entry file for starting up the first input device preventing a user from opening the first input device again, the mode is one of a software and a hardware, the software is a specific application program, and the hardware is a second input device, the input blocking program executes the specific application program, the upper frame is displayed when the input blocking program recognizes that the second input device is removed, the specific application program is set as the upmost layer of frame by a user, the specific application program is automatically executed and a maximized frame is displayed when one of a first and a second statuses being an absence of the maximized frame used by the specific application program and a turn-off of the specific application program is detected by the input blocking program over a period of time, the input blocking program is used to recognize a Windows class name and a Windows caption name, the upper frame is displayed when the specific application program is turned off, and the upper frame is a frame for executing the specific application program, wherein the step (a) further comprises steps of:
(a1) utilizing the input blocking program to detect a second input device;
(a2) removing the second input device; and
(a3) closing a first application program by means of the input blocking program to limit a usage of the first application program, wherein the first application program is a "Word" application program.

Preferably, the locking method further includes a step of: (c) providing a receiving device receiving a triggering signal and locking the computer accordingly, wherein the receiving device is disposed on a PCB of the computer, the mode is a connector having a detecting device, the detecting tool is the detecting device, the triggering signal is a manipulation signal generated when the connector undertakes a substantial manipulation, and locks the computer accordingly, the substantial manipulation is one selected from a group consisting of a separation, a pseudo separation, a combination, a pseudo combination and a power breakdown manipulation, and the manipulation signal is one of a separation signal and a combination signal.

Preferably, the computer includes a first and a second input devices, the detecting tool is an input blocking program, the mode is the second input device, and the step (a) further includes steps of: (a1) providing a locking instruction to be set by the first input device ; (a2) triggering the locking instruction to lock the first input device; and (a3) displaying an upper frame so as to cover a previous frame originally in use.

Preferably, the step (a) further includes steps of: (a4) providing the input blocking program to recognize the locking instruction so as to lock the first input device accordingly; (a5) providing the second input device and electrically connecting the second input device to the computer; (a6) recognizing a built-in identification (ID) of the second input device by the input blocking program; (a7) accomplishing a startup of the input blocking program after the built-in ID of the second input device is confirmed, wherein the computer further comprises a screen having a taskbar area and a notification area, the input blocking program causes an icon of "PS/2 blocked" to be shown both in the taskbar area and the notification area of the screen to inform the user that the input blocking program is starting; and (a8) removing the upper frame to recover the previous frame after recognizing the inputted unlocking instruction unmistakably by the input blocking program, wherein the step (a1) further comprises a step of (a11) providing an unlocking instruction to be set by the first input device; the step (a5) further comprises the steps of: (a51) inputting the unlocking instruction via the second input device; and (a52) unlocking the first input device after the built-in ID and the unlocking instruction are both confirmed, the input blocking program causes an on-screen keyboard to be shown on the upper frame such that the unlocking instruction could be chosen/inputted by the second input device, the unlocking instruction is set as one selected from a group consisting of a hot key, a secret code and a left key of a mouse, and the input blocking program locks the first input device according to a hardware status-checking message sent from Windows.

Preferably, the computer is a local computer, the step (a) further includes the steps of: (a4) displaying an input secret code window on the upper frame; and (a5) receiving an unlocking instruction from a remote computer having a remote control program, wherein the unlocking instruction is inputted via the remote computer and is transmitted to the local computer via an internet, the step (a1) further comprises a step of: (a11) utilizing the input blocking program to set the locking instruction and the unlocking instruction, and the step (a2) further comprises a step of: (a21) triggering the locking instruction by a user to lock the first input device, wherein the unlocking instruction is one of a hot key and a secret code, and the input blocking program provides an input secret code window receiving one of the secret code and the hot key inputted by the user to unlock the first input device accordingly.

Preferably, the step (a) further includes the steps of: (a4) utilizing the input blocking program to detect an existence of the second input device; and (a5) removing the second input device, wherein the step (a3) further comprises a step of: (a31) using the input blocking program to display the upper frame so as to cover the previous frame having a function table with a non-beginning item and an exchanging program table with a non-hot key triggered by the first input device thereafter, wherein the computer further comprises a USB slot, the first input device comprises a PS/2 keyboard, and the second input device comprises a dongle electrically connected to the USB slot, the step (a1) further comprises a step of: (a11) utilizing the input blocking program to identify a hardware ID of an operating system of the second input device, and the second input device comprises a USB mouse, the input blocking program is utilized to monitor the second input device, the input blocking program is monitoring one of a removal of the second input device and an identification of a built-in ID of the second input device by the input blocking program so as to display the upper frame thereafter, the second input device comprises a USB mouse, and the locking instruction is triggered by a user to lock the first input device, the input blocking program changes a registration entry file having an item of job manager reading data preventing the user from starting a job manager of Windows to close the input blocking program, the input blocking program changes a reading data of a safety mode of the registration entry file preventing the user from entering the safety mode to access a file, the input blocking program changes a reading data of a registration editing program preventing the user from starting the registration editing program so as to change the registration entry file, the input blocking program sets a secret code so as to change the registration entry file, the input blocking program sets a secret code to remove the input blocking program via inputting the secret code, and the upper frame is displayed when the input blocking program can not detect the built-in ID of the second input device over a period of time.

According to the second aspect of the present invention, a computer having a locking function includes a detecting tool detecting a triggering signal, and a receiving device receiving the triggering signal and locking the computer accordingly.

Preferably, the computer further includes a second input device electrically connecting to the computer, inputting the unlocking instruction and having a built-in ID to be identified by the input blocking program so as to accept the unlocking instruction, unlock the first input device and remove the upper frame after recognizing the built-in ID unmistakably, wherein the detecting tool is an input blocking program, the receiving device is a first input device, the triggering signal is an input data of the first input device, the first input device receives the input data and sets a locking instruction and an unlocking instruction, and the input blocking program recognizes the inputted locking instruction and locks the first input device by displaying an upper frame to cover a previous frame originally in use, the second input device is a cordless mouse, the built-in ID is one of a hardware ID of a dongle of the cordless mouse and a hardware ID of a MP3, and the unlocking instruction is accepted after the built-in ID is recognized unmistakably so as to unlock the first input device, the first input device comprises one of a PS/2 keyboard and a PS/2 mouse; when the second input device comprises one of a USB keyboard and a USB mouse, the built-in ID is a hardware ID of one of the USB keyboard and the USB mouse; when the second input device comprises an external docking station electrically connected to the computer and input with the unlocking instruction, the computer further comprises a third input device electrically connected to the docking station; the third input device comprises one of a specific USB keyboard and a specific USB mouse, the input blocking program identifies the built-in ID, which is a hardware ID of one of the specific USB keyboard and the specific USB mouse, the computer further comprises a second input device having a built-in ID to be identified by the input blocking program, when the computer is a local computer, the second input device comprises an external network interface card (NIC) electrically connected to the local computer, and the unlocking instruction is inputted via one of a mouse and a keyboard of a remote computer, the unlocking instruction is received by the local computer via an internet, the built-in ID is a hardware ID of the NIC, the locking instruction is set as a "Ctrl" key plus a "1" key, the unlocking instruction is a hot key, the hot key is set as a "Ctrl" key and an "Alt" key plus a "8" key, the computer uses a data transmission control device having a remote control mode controlled by a security code and limiting a data transmission to and fro the computer so as to interfere with the second input device, when the second input device is one of a PS/2 keyboard and a PS/2 mouse, the PS/2 keyboard and the PS/2 mouse are converted to a USB keyboard and a USB mouse respectively via a PS/2 to USB adaptor/converter, the computer further comprises a CPU having one of a 32 bit data bus and a 64 bit data bus, an arithmetic logic unit and an operating system, and the input blocking program changes a registration entry file of the operating system, causes the computer to be re-entered and keeps the relative settings before a restarting action of the computer.

Preferably, the computer further includes a connector having a detecting device, wherein the receiving device is disposed on a PCB of the computer, the detecting tool is the detecting device, the triggering signal is a manipulating signal generated when the connector undertakes a substantial manipulation, and locks the computer accordingly, and the manipulation signal is one of a separation signal and a combination signal, a manipulation of a pseudo separation and a pseudo combination is achieved by a control signal outputted by a secret code remote control, the connector has a detecting device, the separation signal is triggered by the detecting device when the connector engages a separation action, the receiving device has a switch, the switch is one of an electronic switch remote controlled by a first secret code and a finger dialing switch controlled by a second secret code, the computer engages an open detection when one of the electronic switch and the finger dialing switch is turned on, the connector and one of a USB type A connector and a PS/2 connector is used to unlock the computer, an identification action is proceeded by a detection circuit, the detection circuit has two comparators, the receiving device has a switch, the computer engages a close detection, which can be turned into an open detection latter, a first, a second and a third unlocking devices are used to unlock the computer, the first unlocking device uses a USB type A male connector electrically connecting a first terminal to one of a second and a third terminals of the switch and turned off, an identification action is proceeded by a detection circuit, the second unlocking device uses a USB type A male connector electrically connecting a first terminal to two out of three of a second, a third and a fourth terminals of the switch, an identification action is proceeded by a first detection circuit, the first detection circuit has two comparators, the third unlocking device uses a USB type A male connector electrically connecting the first terminal to the second, the third and fourth terminals of the connector, an identification action is proceeded by a second detection circuit, the second detection circuit has three comparator, and the PCB is one selected from a group consisting of a PCB having a PCI, a front case PCB, a PCB inside a power supply, a PCB inside a UPS, a PCB inside a USB device and a main board of the computer.

The present invention may best be understood through the following descriptions with reference to the accompanying drawings, in which:

Fig. 1 is a flow chart of a locking method for the first input device of a computer according to the first preferred embodiment of the present invention;

Fig. 2 is a flow chart of a startup of an input blocking program according to the first preferred embodiment of the present invention;

Fig. 3 is a flow chart of an unlocking method for the first input device of a computer according to the first preferred embodiment of the present invention;

Fig. 4 is a portion of a flow chart of a locking method for the first input device of a computer according to the scond preferred embodiment of the present invention;

Fig. 5 is a portion of a flow chart of a locking method for the first input device of a computer according to the third preferred embodiment of the present invention;

Fig. 6 is a schematic circuit diagram of a device adapted to the locking method for the first input device and employing the secret code remote control method to control the data transmissions to and fro the computer according to the first preferred embodiment of the present invention; and

Fig. 7 is a flow chart of a locking method for the first input device of a computer according to the fourth preferred embodiment of the present invention;

Fig. 8 is a schematic diagram of a connector for locking the computer according to the fifth preferred embodiment of the present invention;

Fig. 9 is a flow chart of a locking method for a computer according to the fifth preferred embodiment of the present invention; and

Fig. 10 is a schematic circuit diagram of a device for locking the computer according to the sixth preferred embodiment of the present invention.

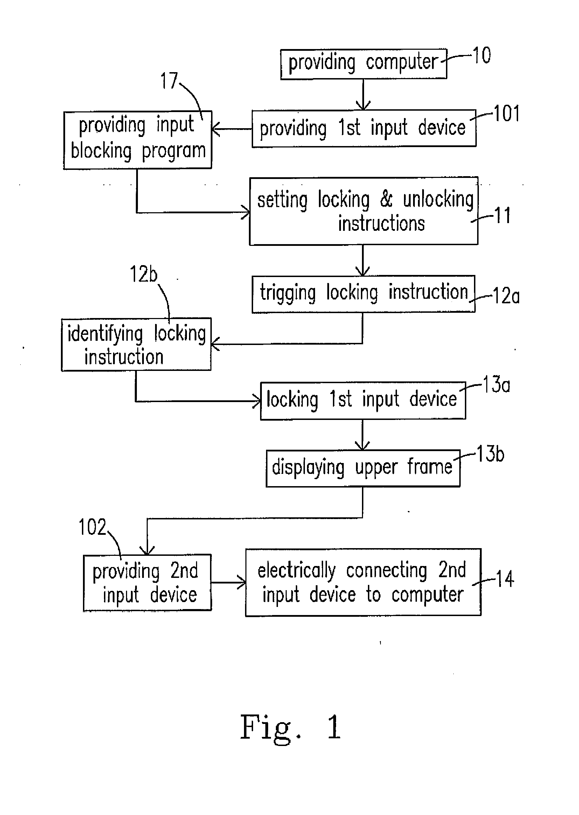

Please refer to Fig. 1, which shows a flow chart of a locking method for a first input device of a computer according to the first preferred embodiment of the present invention. In Fig. 1, the proposed locking method includes the steps of: providing a computer (step 10); providing a first input device (step 101); providing an input blocking program (step 17); setting locking and unlocking instructions (step 11, to be set by the first input device, e.g., a keyboard); triggering the locking instruction (by a user, step 12a); identifying the locking instruction (step 12b); locking the first input device (step 13a); displaying an upper frame (step 13b, to cover a previous frame originally in use); providing a second input device (step 102, e.g., a USB keyboard); and electrically connecting the second input device to the computer (step 14).

In which, the unlocking instruction (see the step 11) is usually set as one selected from a group consisting of a hot key, a secret code and a left key of a mouse, and the upper frame could be accomplished by using a customer provided product, e.g., a most suitable photograph or a company's Logo diagram, read and used by the input blocking program. Besides, the upper frame is just beneath the "begin function table" frame starting up by the Microsoft Windows key, thus the upmost frame on a screen of the computer should be the "begin function table" frame starting up by the Microsoft Windows key (i.e., the "beginning" key). When the first input device (e.g., a PS/2 mouse) is locked (see the step 13a), no matter what kind of inputting device is used (e.g., one of a PS/2 keyboard and a USB keyboard), only this Windows key could be functioned, which only causes the appearance of the "begin function table" frame, and by choosing any other push button of the first input device causes no reaction at all so as to dramatically limiting the range of usage of the first input device. Even though the user wants to input a message via a USB keyboard, and the message will still be covered by the upper frame and the same restriction will be kept.

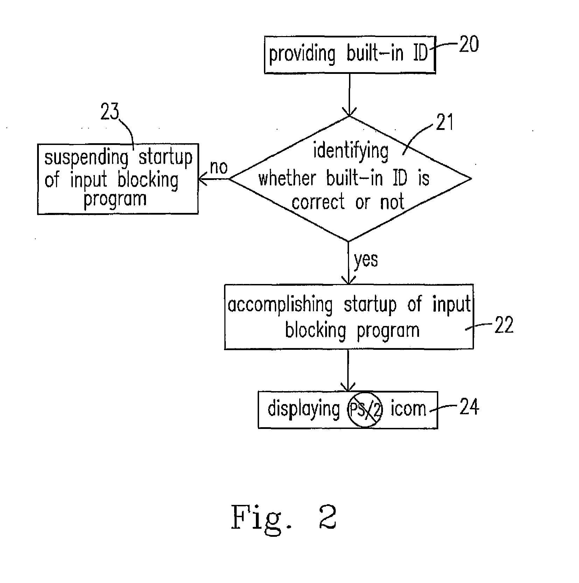

Referring to Fig. 2, it is a flow chart of a startup of an input blocking program according to the first preferred embodiment of the present invention. Fig. 2 includes steps of: providing a built-in ID (identification of the second input device, the step 20); identifying whether the built-in ID is correct or not (the step 21); accomplishing the startup of the input blocking program (the step 22, if the answer is "yes" in the step 21); suspending the startup of the input blocking program (the step 23, if the answer is "no" in the step 21); and displaying "closing PS/2" icon (the step 24).

In Fig. 2, only after the built-in ID is identified as "correct", then the startup of the input blocking program is accomplished (the step 22) and the user could use the first input device to set the locking instruction (see the step 11 of Fig. 1) to make sure only the identified and authorized USB keyboard is used. Even if the input blocking program is modified such that it does not need to lock the first input device, but only to display the upper frame, still it has the function of preventing other unauthorized person from using the inputting device. The input blocking program display a "closing PS/2" icon (the step 24) to inform the user that the computer is starting up the input blocking program. Even though the input blocking program has identified the built-in ID of the second input device and has accomplished the startup, but still the upper frame is not removed yet.

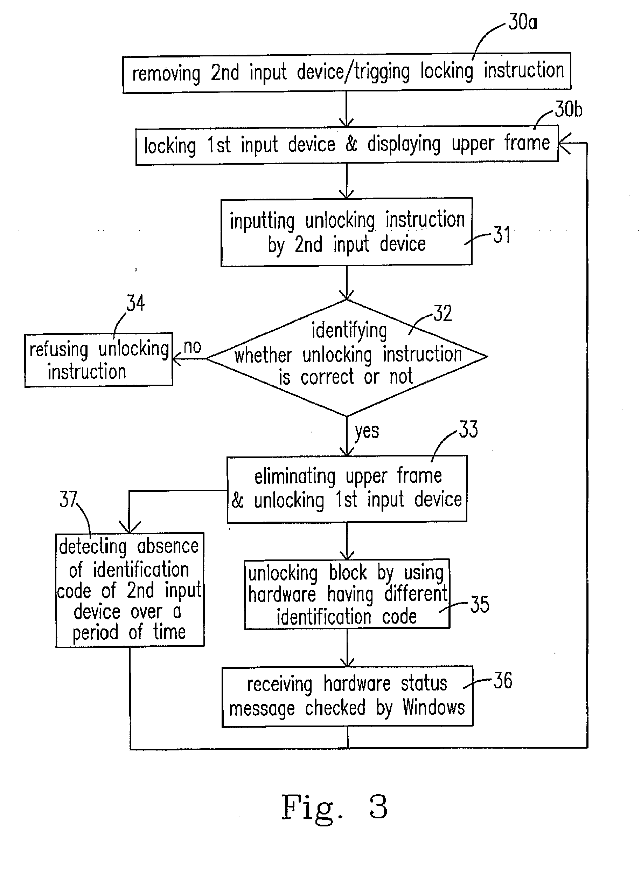

Please refer to Fig. 3, which shows a flow chart of an unlocking method for the first input device of a computer according to the first preferred embodiment of the present invention. In Fig. 3, it includes steps of: removing the second input device/triggering the locking instruction (the step 30a); locking the first input device & displaying the upper frame (the step 30b); inputting the unlocking instruction by the second input device (the step 31); identifying whether the unlocking instruction is correct or not (the step 32); eliminating the upper frame & unlocking the first input device (the step 33, if the answer is "yes" in the step 32); suspending the startup of the input blocking program (step 34, if the answer is "no" in the step 32); unlocking the blocking by using a hardware having a different identification code (the step 35); receiving a hardware status message checked by Windows (the step 36); and detecting an absence of identification code of the second input device over a period of time (e.g., 5 minutes, see the step 37).

At the step 30a, the input blocking program accepts a removing message for the second input device such that the removal of second input device will trigger the step 30b and the second input device has a function of a security product of the computer lock (or it could be named as a "hot plug" blocking function, and the input blocking program is corresponding to an "on system detector"). Surely, the input blocking program could be set to request the identification of the built-in ID before unlocking. But to avoid the break down of the second input device, which will result in the dilemma that a legal user could not unlock the first input device, the unlocking of the first input device does not need to identify the built-in ID, and so that the restrictions toward the unlocking action is relatively loose.

Certainly, the input blocking program of the present invention could be modified a little bit such that the unlocking action of the upper frame and the first input device do not need to identify the built-in ID of the second input device, and the upper frame will be removed and the first input device will be unlocked when the unlocking instruction is identified unmistakably by the input blocking program.

Referring to Fig. 3, the input blocking program of the provided method also receives other device messages (device messages which are messages provided by Windows while it checks the peripheral hardware statuses, include the device changing message indicating that the second input device is removed, and could be sent out when the user is printing an information, is connecting to the internet and is receiving/delivering emails while using the Outlook Express) except for the device message indicating that the second input device is removed. Unless the user only uses the software, the first input device is likely to be locked at any time. When the second input device is changed to be one selected from a group consisting of an inter-connected network card, a USB PCI card and an inter-connected USB, usually an input blocking program which does not support the hot plug function will be used, employs a boot detector mode, and does not have the "on system detector" function. If the user removes the second input device and turns on the computer once again, the input blocking program will not be started up again, and the upper frame will not be displayed so as to avoid that the frame in use is covered when the second input device is broken down and results in an adverse effect caused by an over interference of the normal functions of the computer. Certainly, the inter-connected PCI USB card could also be changed to an input blocking program supporting the "on system detector" function. After one of the steps 36 and 37, the proposed method goes back to the step 30b.

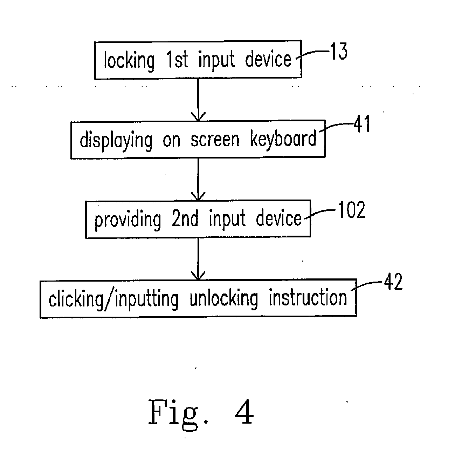

In Fig. 4, it shows a portion of a flow chart of a locking method for the first input device of a computer according to the second preferred embodiment of the present invention. The provided flow chart includes steps of: locking the first input device (the step 13); displaying the "on screen keyboard" (on the upper frame, the step 41); providing the second input device (e.g., a USB mouse, the step 102); and clicking/inputting the unlocking instruction (which is one selected from a group consisting of a hot key, a secret code and a left key of a mouse, see the step 42).

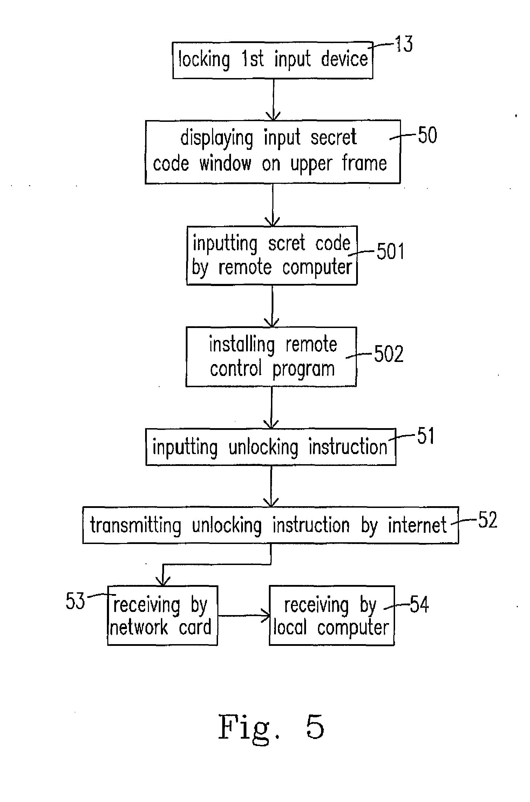

Referring to Fig. 5, it is a portion of a flow chart of a locking method for the first input device of a computer according to the third preferred embodiment of the present invention. In Fig. 5, which includes steps of: locking the first input device (the step 13); displaying the "input secret code window" on the upper frame (the step 50); inputting the secret code by a remote computer (the step 501); installing a remote control program (the step 502); inputting an unlocking instruction (the step 51); transmitting the unlocking instruction by an internet (the step 52); receiving (the unlocking instruction) by a network card (the step 53); and receiving (the unlocking instruction) by a local computer (the step 54). The local computer requires the installation of a controlling program. The proposed locking method is suitable for a server such that the keyboard and the mouse of the server are temporarily losing its functions so as to avoid the randomly manipulations of an unauthorized person to achieve a very tight protection efficiency. If the user employs the Window XP operating system, a remote desktop protocol (RDP) could be used to replace the remote control program and the controlled program.

The input blocking program could be respectively used by two different users on the same computer. If each of the two users logs out directly after entering the operating system, the two users will influence each other on whether the PS/2 is blocked. If a thin client of a heritage program of the RDP is used, and the input blocking program is starting up at a user's terminal, the PS/2 interface of the server's terminal is turned off and a screen of the user's terminal is covered (by an upper frame) but a PS/2 interface of the client's terminal is not turned off and a screen of server's terminal is not covered, thus this blocking program is quite suitable for using on a server's terminal. But when the user removes the second input device on the server's terminal, the input blocking program will cover the server's terminal and the user's terminal at the same time.

The present invention provides a device for locking a computer, the proposed device electrically connected to a computer, wherein the computer has an input blocking program and a first input device, the first device is used to set a locking instruction and an unlocking instruction, the locking instruction is triggered by a user via the first input device so as to lock the first input device. The input blocking program displays an upper frame to cover a previous frame originally in use, wherein the locking device includes a second input device. For inputting the unlocking instruction and a built-in ID for being identified by the input blocking program, the unlocking instruction is accepted and then unlocks the blocking action of the first input device after the built-in ID is identified unmistakably.

The provided locking device could be one of a USB keyboard and a USB mouse (using it as a second input device as shown in Fig. 1). The first input device is one of a PS/2 keyboard and a PS/2 mouse, and the built-in ID is a hardware ID of one of the USB keyboard and the USB mouse. Surely, the locking device could be changed to a USB wireless mouse (used as the second input device as shown in Fig. 1), and the built-in ID is a hardware ID being one selected from a group consisting of a dongle of the wireless mouse, a hardware ID of a USB wireless network card, a USB flash disk and a MP3. The input blocking program could only lock the PS/2 so as to facilitate the user uses the PS/2 keyboard to unlock such that the easy to carry dongle of the mouse could be used to restrict the user of a computer in a library.

Referring to Fig. 5 again, the second input device of the locking device can be changed to a network card (see the step 53 of Fig. 5) externally connected to the computer, and one of a mouse and a keyboard of a remote computer to input the unlocking instruction. The unlocking instruction of the locking device is transmitted to the computer via an internet, and the built-in ID is a hardware ID of the network card. Surly, before using the network card of the present invention, the built-in network card of the computer must be turned off firstly, and then the network card could be changed to an externally connected wireless network card. The locking instruction of the locking device could be set as a "control" key plus a "1" key (or a combination of other types of push buttons), the unlocking instruction is set as a hot key, and the hot key is set as a "control" key and an "Alt" key, and an "eight" key (surly, it could be changed to a combination of other types of push buttons).

If the above-mentioned computer is a notebook computer, the user could use a USB mouse (the second input device) to lock and unlock the built-in PS/2 keyboard and PS/2 touch pad (the first input device) of the notebook computer.

The second input device of the computer could also employ an external docking station electrically connected to the computer (not shown in Fig. 5) to input the unlocking instruction. The computer further includes a third input device electrically connected to the docking station (not shown in Fig. 5) for inputting the unlocking instruction. The third input device is one of a specific USB keyboard and a specific USB mouse, and the input blocking program is used to identify the hardware ID of the specific USB keyboard and the specific USB mouse and to have a multiple hardware identification function. That is to say, there could be more than two input devices in the present invention.

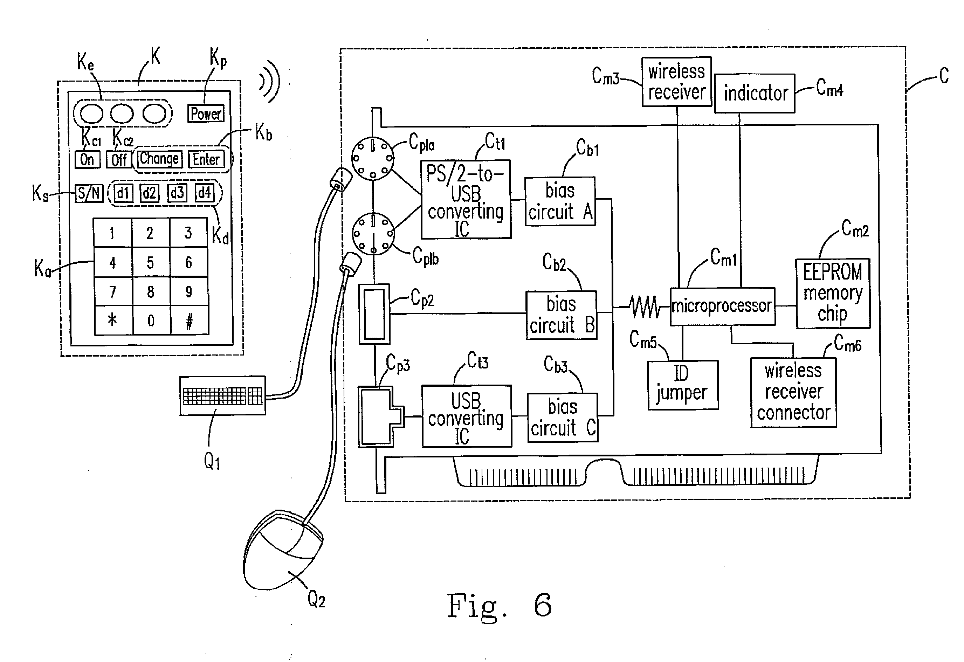

Please refer to Fig. 6, it is a schematic circuit diagram of a device adapted to the locking method for the first input device and employing the secret code remote control method to control the data transmissions to and fro the computer according to the first preferred embodiment of the present invention. In which, it includes a second input device C and a remote control K. Referring to Fig. 6, the second input device C is a central control device as well as an interface device (for example the PCI interface card, the USB Root-Hub, etc.) connected to a computer main board. The interface device C includes a PS/2 port A Cp1a, a PS/2 port B Cp1b, a USB port Cp2, an internet connection port Cp3, a PS/2-to-USB converting IC Ct1, a USB converting IC Ct3, a bias circuit A Cb1, a bias circuit B Cb2, a bias circuit C Cb3, an inner microprocessor Cm1, an EEPROM memory chip Cm2, a wireless receiver Cm3, an indicator Cm4, an ID jumper Cm5 and a wireless receiver connector Cm6. The PS/2 port A Cp1a is able to connect to a keyboard device Q1, and the PS/2 port B Cp1b is able to connect to a mouse device Q2. The remote control K has a number key Ka, an equipment indicating key Ke, an I/O port indicating key Kd, an open key Kc 1 and a close key Kc2, and a power switch Kp for turning on or off the remote control K. If the interface device C is removed from the main frame, then the input blocking program won't start up. If the interface device C is removed, the input blocking program can not recognize the interface device C's ID, and the upper frame will not be displayed once the user restarts the computer.

When the user uses the remote control K to interfere the second input deice C, it could generate an effect equivalent to the removal of the second input device (it could be called a "simulated hot plug").

The computer further includes a CPU having one of a 32 bit data bus and a 64 bit data bus, an arithmetic logic unit and an operating system (which are not shown in Fig. 6), and the input blocking program changes a registration entry file of the operating system, causes the computer to be restarted and keeps the relative settings before the restart action of the computer.

The input blocking program of the present invention displays an upper frame to cover a previous frame originally in use having a function table with a non-beginning item and an exchanging program table with a non-hot key. The second input device could be viewed as a computer lock, but it may not be necessary to recognize a hardware ID. Also, the first input device could be a PS/2 keyboard, and the second input device could be a dongle connected to a USB slot.

The input blocking program of the present invention could provides an input secret code window on the upper frame for the user to input an secret code/use a hot key to unlock.

The provided locking method could be employed to close a first application program (e.g., a "Word" program) via the input blocking program including steps of: utilizing the input blocking program to detect the second input device; removing the second input device; and closing a first application program by means of the input blocking program to limit a usage of the first application program. The second input device could be viewed as a software lock, but it may not necessary to recognize the hardware ID. The input blocking program is used to recognize a Windows class name and a Windows caption name both of the first application program and confirmed by the user so as to close the first application program accordingly.

Also, the input blocking program changes a registration entry file having an item of job manager reading data preventing the user from starting up a job manager of the Windows to close the input blocking program, the input blocking program changes a reading data of a safety mode of the registration entry file preventing the user from entering the safety mode to access a file, the input blocking program changes a reading date of a registration editing program preventing the user from starting the registration editing program so as to change the registration entry file, and the input blocking program sets a secret code to remove the input blocking program via inputting the secret code.

The input blocking program of the proposed method is also used to detect/receive a device message and to display an upper frame so as to cover a previous frame having a function table with a non-beginning item and an exchanging program table with a non-hot key. The device messages could be one selected from a group consisting of messages provided by Windows while it checks the peripheral hardware statuses and other messages related to the hardware. The input blocking program could also sets the statuses of the computer as: when an absence of identification code of the second input device is detected over a period of time (e.g., 5 minutes similar to step 37 of Fig. 3), then goes back to the status of displaying an upper frame (similar to step 30b of Fig. 3). Thus, a user of pirated software can not use his/her copied software smoothly, and who will give up the usage of the pirated software at last.

The input blocking program could also be used to monitor a mode, and to display an upper frame so as to cover a previous frame having a function table with a non-beginning item and an exchanging program table with a non-hot key. The mode is one of a software (e.g., an inventory managing program) and a hardware. The software is used to interfere with the execution of other unauthorized software such that the input blocking program has a function of forcibly executing the software lock, and the hardware could be a second input device.

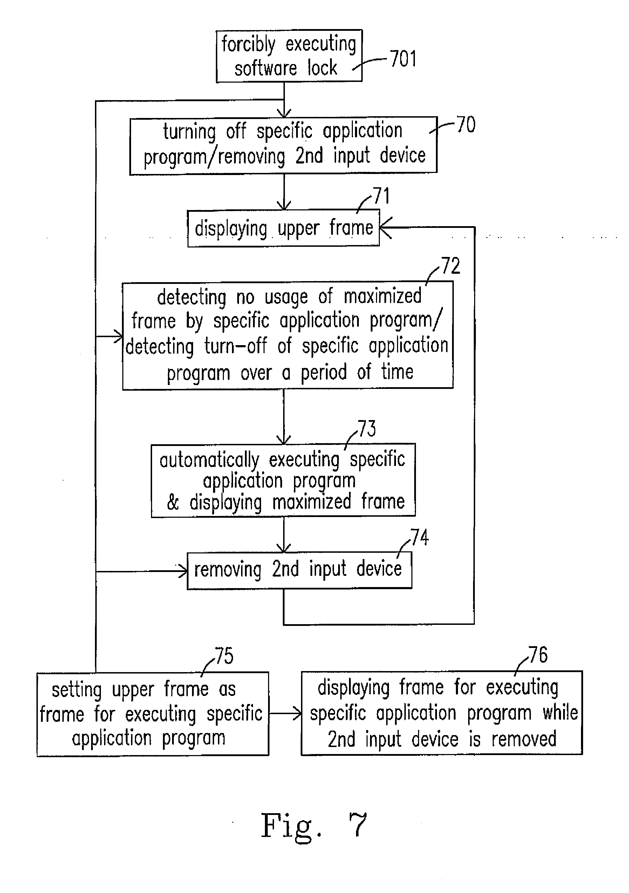

Referring to Fig. 7, it is a flow chart of a locking method for the first input device of a computer according to the fourth preferred embodiment of the present invention. It includes the steps of: forcibly executing a software lock (step 701); turning off a specific application program/removing a second input device (step 70); displaying an upper frame (step 71); detecting no usage of a maximized frame by the specific application program/detecting a turn-off of the specific application program over a period of time (step 72); automatically executing the specific application program and displaying the maximized frame (step 73); removing the second input device (step 74); setting the upper frame as a frame for executing the specific application program (step 75); and displaying the frame for executing the specific application program while the second input device is removed (step 76).

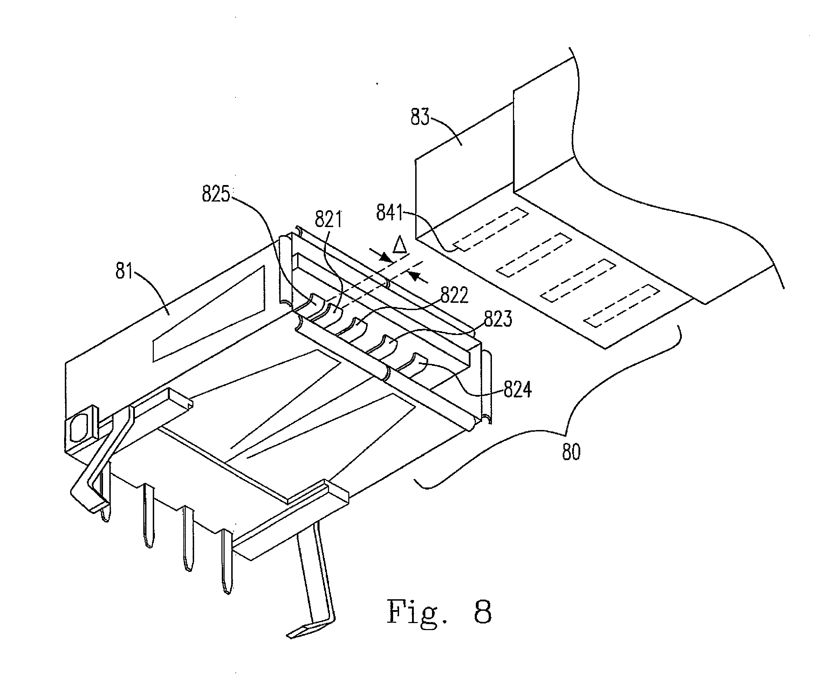

Please refer to Fig. 8, it is a schematic diagram of a connector for locking the computer according to the fifth preferred embodiment of the present invention. In which, a connector 80 includes a USB type A female connector 81 and a first to a fifth terminals 821 to 825, the first terminal 821 has a shift to the right of Δ to facilitate the deposition of the fifth terminal 825, the fifth terminal is a detecting device 825, the connector 80 also includes a USB type A male connector 83 having a first terminal 841, the first and the fifth terminals of the female connector 81 (821 and 825) could be separated from the first terminal 841 of the male connector 83 through a separation action, and the number of the detection terminal (e.g., 825) could be more than one.

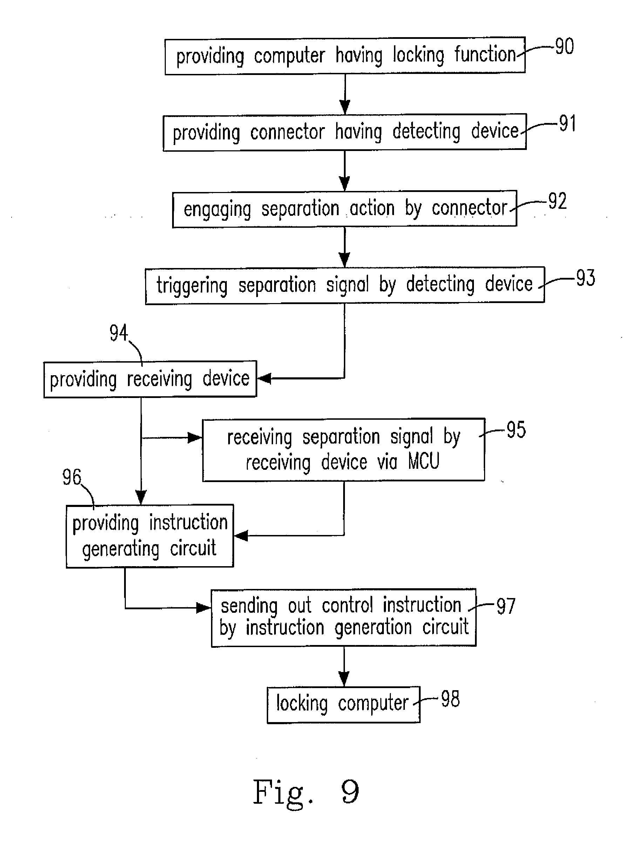

Referring to Fig. 9, it shows a flow chart of a locking method for a computer according to the fifth preferred embodiment of the present invention. In which, it includes steps of: providing a computer having a locking function (step 90); providing a connector having a detection device (step 91); engaging a separation action by the connector (step 92); triggering a separation signal by the detecting device (step 93); providing a receiving device (step 94); receiving a separation signal by the receiving device via a MCU (micro control unit, step 95); providing an instruction generating circuit (step 96); sending out a control instruction by an instruction generating circuit (step 97), and locking the computer (step 98).

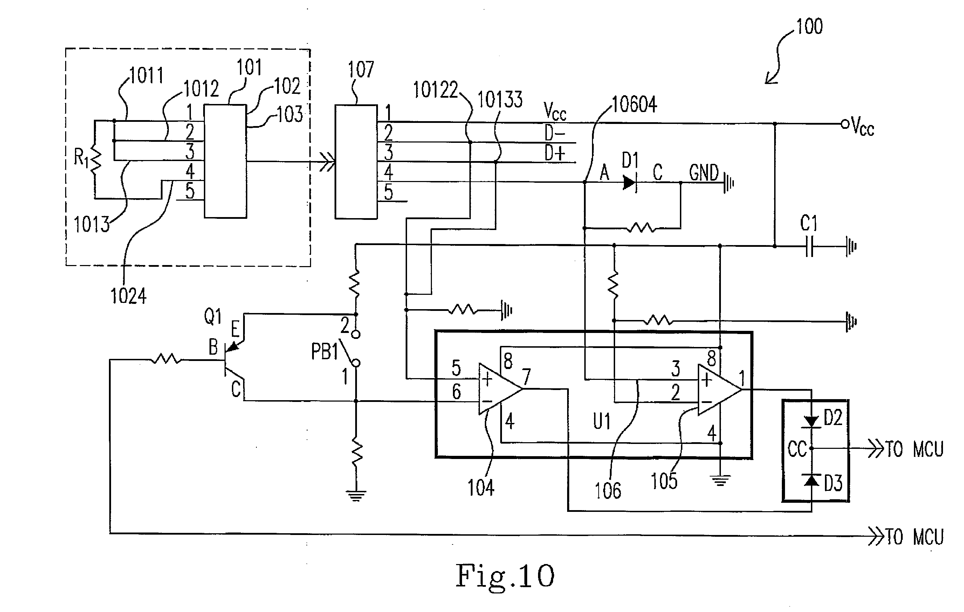

Please refer to Fig. 10, it shows a schematic circuit diagram of a device for locking the computer according to the sixth preferred embodiment of the present invention. In which, it includes a connector (e.g., it could be one selected from a group consisting of a first/a second/a third unlocking devices 101/102/103 as shown in Fig. 10) triggering a manipulation signal when the connector/first unlocking device 101 engages a substantial manipulation, and a receiving device 100 disposed in the computer via a PCB (printed circuit board) and receiving the manipulation signal to lock the computer. There is a connector set which includes the connector (101/102/103) having five pins (1-5), and a resistor R 1 coupled to the terminals 1011 and 1024, and the terminals 1012 and 1013 are coupled to the terminal 1011. Each connector could be a male USB type A connector. The receiving device 100 includes a connector 107 which could be a female USB type A connector and has five pins (1-5) also, switches Q1 and PB1, two comparators 104 & 105 and diodes D1-D3, a capacitor C1 and several resistors (not marked). The substantial manipulation is one selected from a group consisting of a separation, a pseudo separation, a combination, a pseudo combination and a power breakdown manipulation. The manipulation signal is one of a separation and a combination signals, the connector 101 could be a connector 80 having a detecting device 825 as shown in Fig. 8, and the PCB is one selected from a group consisting of a PCB having a PCI, a front case PCB, a PCB inside a power supply, a PCB inside a UPS, a PCB inside a USB device, and a main board of the computer. The receiving device 100 could include a switch being a mechanism to maintain safety. The switch is selected from a group consisting of a remote controlled electronic switch Q1 (e.g., a PNP transistor), a finger dialing secret code switch (setting the switch by fingers), a manual operated mechanic switch PB1 and a switch. The close-loop 106 connecting the fourth terminal of the USB type A connector 107, the diode D1 (e.g., a Shottky diode, via the node 10604) and a comparator 105 is used to engage an open detection when the switch Q1/PB1 is omitted, and an ordinary USB type A connector (without the detecting device at the fifth terminal, e.g., a USB flash disk) could be used (to replace one being selected from a group consisting of the connectors 101/102/103) such that the fourth terminal of this USB connector could be connected to the diode D1 and the comparator 105 to test whether the fourth terminal is grounded so as to unlock the computer. Surely, an ordinary USB type A connector and a specific connector (e.g., a PS/2 connector without the detecting device at the fifth terminal also) could be used to unlock a computer via connecting to two Shottky diodes D2 and D3 and two comparators 104 and 105 to detect whether the fourth terminals of the USB connector and the PS/2 connector are grounded so as to unlock the computer. The above-mentioned PS/2 connector could be replaced by an ordinary USB type A connector. Also, when the switch Q1 is turned off, the receiving device 100 could be changed to operate under a close detection mode, which can be switched to an open detection mode latter, such that even if the unlocking device (101/102/103) is lost or malfunctioned, the switch Q1 could be turned on and the unlocking device could be changed to an open detection mode. Then, the first/second/third unlocking devices are employed to unlock the computer.

Besides, the first unlocking device 101 could be a USB type A male connector, and the first and the fourth terminals 1011 & 1024 are electrically connected to the resistor R1 so as to decrease the power voltage (VCC, e.g., from 5V to 0.3V) before the first unlocking device 101 is connected to the Shottky diode D1. The USB type A male connector of the first unlocking device 101 could be connected to a USB type A female connector 107, and the fourth terminal of the USB type A female connector 107 is connected to the Shottky diode D1 at a node A/10604. There are in total three different combinations: i.e. a combination of the second and the third terminals 1012 and 1013, a combination of the second and the fourth terminals 1012 and 1024, and a combination of the third and the fourth terminals 1013 and 1024. When the combination of the second and the third terminals 1012 and 1013 is used, the employed detection circuit includes two comparators to engage an identification action (only one comparator 104 is shown in Fig. 9, and the third node 10133 will be connected to a third comparator, which is not shown in Fig. 9, instead of the comparator 104). When the combination of the second and the fourth terminals 1012 and 1014 is used, the two comparators 104 and 105 are employed to engage an identification action. When the combination of the third and the fourth terminals 1013 and 1014 is used, the two comparators 105 and a third comparator (only comparator 105 is shown in Fig. 9, and the third node 10133 is connected to the third comparator (not shown) instead of the comparator 104) are employed to engage an identification action. Only when two comparators are at high level H, the second unlocking device 102 would cause the circuit connected to MCU to be conducted, which is quite different from that of the first unlocking device 101. When the first terminal 1011 is only electrically connected to one of the second and the third terminals 1012-1013. There are in total two different combinations: i.e. the second and the third terminals 1012 and 1013, the second and the fourth terminals 1012 and 1024 (i.e. there are two different configurations) and through one of a second node 10122 and a third node 10133, a detection circuit is employed to engage an identification action, the detection circuit could be one of a comparator 104 and a analog to digital converter (ADC).

As to the second unlocking device 102, a USB type A male connector is used, and the first terminal 1011 is electrically connected to two out of three of the second, the third and fourth terminals 1012-1013 and 1024 of the connector/the second unlocking device 102. There are in total three different combinations: i.e. the second and the third terminals 1012 and 1013, the second and the fourth terminals 1012 and 1024, and the third and the fourth terminals 1013 and 1024. When the combination of the second and the third terminals 1012 and 1013 is used, the employed detection circuit includes two comparators to engage an identification action (only one comparator 104 is shown in Fig. 9, and the third node 10133 will be connected to a third comparator, which is not shown in Fig. 9, instead of the comparator 104). When the combination of the second and the fourth terminals 1012 and 1014 is used, the two comparators 104 and 105 are employed to engage an identification action. When the combination of the third and the fourth terminals 1013 and 1014 is used, the two comparators 105 and a third comparator (only comparator 105 is shown in Fig. 9, and the third node 10133 is connected to the third comparator (not shown) instead of the comparator 104) are employed to engage an identification action. Only when two comparators are both at high level H, the second unlocking device 102 would cause the circuit connected to MCU to be conducted, which is quite different from that of the first unlocking device 101.

As to the third unlocking device 103, a USB type A male connector is used, and the first terminal 1011 is electrically connected to the second, the third and fourth terminals 1012, 1013 and 1024 of the connector/the third unlocking device 103. The employed detection circuit includes three comparators to engage an identification action (only two comparator 104-105 are shown in Fig. 9, and the third node 10133 will be connected to a third comparator, which is not shown in Fig. 9, instead of the comparators 104-105). Only when all three comparators are all at high level H, then the third unlocking device 103 could cause the circuit connected to MCU to be conducted.

The present invention could also be employed to various apparatuses having a locking function such as a TV, a LCD TV, and a video.

In conclusion, the provided method for managing a first input device of a computer and the device for the same overcome the drawbacks of using the bias circuit in the provided device for locking the keyboard of a computer in the prior art, cause the management of the keyboard more convenient and accomplish the identification process adapted to the operations of the relative hardware. Also, the present invention proposes a method for locking a computer and the device for the same so as to avoid using the technology of multiple hardware identification in setting up the hardware one by one such that the management of the computer is much more convenient.

## Claims

1. A locking method for a computer, comprising steps of:
(a) providing a detecting tool (825, 1024) to monitor a mode (80, 101-103); and
(b) detecting a removal of the mode (80, 101-103) via the detecting tool (825, 1024) so as to lock the computer thereafter.

2. A locking method according to Claim 1 **characterized by** further comprising a step of: (c) displaying the upper frame so as to cover the previous frame triggered by the first input device (Q1) and having a function table with a non-beginning item and an exchanging program table with a non-hot key via the input blocking program, wherein the detection tool is an input blocking program, the computer is locked via locking a first input device (Q1) of the computer, the first input device (Q1) is a network card, the mode (80, 101-103) is a USB mouse, and the input blocking program changes a reading data of the registration entry file for starting up the first input device (Q1) preventing a user from opening the first input device (Q1) again, the mode (80, 101-103) is one of a software and a hardware, the software is a specific application program, and the hardware is a second input device (C, Q2), the input blocking program executes the specific application program, the upper frame is displayed when the input blocking program recognizes that the second input device (C, Q2) is removed, the specific application program is set as the upmost layer of frame by a user, the specific application program is automatically executed and a maximized frame is displayed when one of a first and a second statuses being an absence of the maximized frame used by the specific application program and a turn-off of the specific application program is detected by the input blocking program over a period of time, the input blocking program is used to recognize a Windows class name and a Windows caption name, the upper frame is displayed when the specific application program is turned off, and the upper frame is a frame for executing the specific application program, wherein the step (a) further comprises steps of:
(a1) utilizing the input blocking program to detect a second input device (C, Q2);
(a2) removing the second input device (C, Q2); and
(a3) closing a first application program by means of the input blocking program to limit a usage of the first application program, wherein the first application program is a "Word" application program.

3. A locking method according to Claim 1 **characterized by** further comprising a step of: (c) providing a receiving device (100) receiving a triggering signal and locking the computer accordingly, wherein the receiving device (100) is disposed on a PCB of the computer, the mode (80, 101-103) is a connector having a detecting device, the detecting tool (825, 1024) is the detecting device, the triggering signal is a manipulation signal generated when the connector undertakes a substantial manipulation, and locks the computer accordingly, the substantial manipulation is one selected from a group consisting of a separation, a pseudo separation, a combination, a pseudo combination and a power breakdown manipulation, and the manipulation signal is one of a separation signal and a combination signal.

4. A locking method according to Claim 1, **characterized in that** the computer comprises a first and a second input device (C, Q2), the detecting tool (825, 1024) is an input blocking program, the mode (80, 101-103) is the second input device (C, Q2), and the step (a) further comprises steps of:
(a1) providing a locking instruction to be set by the first input device (Q1);
(a2) triggering the locking instruction to lock the first input device (Q1); and
(a3) displaying an upper frame so as to cover a previous frame originally in use.

5. A locking method according to Claim 4, **characterized in that** the step (a) further comprises steps of: (a4) providing the input blocking program to recognize the locking instruction so as to lock the first input device (Q1) accordingly; (a5) providing the second input device (C, Q2) and electrically connecting the second input device (C, Q2) to the computer; (a6) recognizing a built-in identification (ID) of the second input device (C, Q2) by the input blocking program; (a7) accomplishing a startup of the input blocking program after the built-in ID of the second input device (C, Q2) is confirmed, wherein the computer further comprises a screen having a taskbar area and a notification area, the input blocking program causes an icon of "PS/2 blocked" to be shown both in the taskbar area and the notification area of the screen to inform the user that the input blocking program is starting; and (a8) removing the upper frame to recover the previous frame after recognizing the inputted unlocking instruction unmistakably by the input blocking program,
wherein the step (a1) further comprises a step of (a11) providing an unlocking instruction to be set by the first input device (Q1); the step (a5) further comprises the steps of: (a51) inputting the unlocking instruction via the second input device (C, Q2); and (a52) unlocking the first input device (Q1) after the built-in ID and the unlocking instruction are both confirmed, the input blocking program causes an on-screen keyboard to be shown on the upper frame such that the unlocking instruction could be chosen/inputted by the second input device (C, Q2), the unlocking instruction is set as one selected from a group consisting of a hot key, a secret code and a left key of a mouse, and the input blocking program locks the first input device (Q1) according to a hardware status-checking message sent from Windows.

6. A locking method according to Claim 4, **characterized in that** the computer is a local computer, the step (a) further comprises the steps of:
(a4) displaying an input secret code window on the upper frame; and
(a5) receiving an unlocking instruction from a remote computer having a remote control program,
wherein the unlocking instruction is inputted via the remote computer and is transmitted to the local computer via an internet, the step (a1) further comprises a step of: (a11) utilizing the input blocking program to set the locking instruction and the unlocking instruction, and the step (a2) further comprises a step of: (a21) triggering the locking instruction by a user to lock the first input device (Q1), wherein the unlocking instruction is one of a hot key and a secret code, and the input blocking program provides an input secret code window receiving one of the secret code and the hot key inputted by the user to unlock the first input device (Q1) accordingly.

7. A locking method according to Claim 4, **characterized in that** the step (a) further comprising the steps of:
(a4) utilizing the input blocking program to detect an existence of the second input device (C, Q2); and
(a5) removing the second input device (C, Q2),
wherein the step (a3) further comprises a step of: (a31) using the input blocking program to display the upper frame so as to cover the previous frame having a function table with a non-beginning item and an exchanging program table with a non-hot key triggered by the first input device (Q1) thereafter, wherein the computer further comprises a USB slot, the first input device (Q1) comprises a PS/2 keyboard, and the second input device (C, Q2) comprises a dongle electrically connected to the USB slot, the step (a1) further comprises a step of: (a11) utilizing the input blocking program to identify a hardware ID of an operating system of the second input device (C, Q2), and the second input device (C, Q2) comprises a USB mouse, the input blocking program is utilized to monitor the second input device (C, Q2), the input blocking program is monitoring one of a removal of the second input device (C, Q2) and an identification of a built-in ID of the second input device (C, Q2) by the input blocking program so as to display the upper frame thereafter, the second input device (C, Q2) comprises a USB mouse, and the locking instruction is triggered by a user to lock the first input device (Q1), the input blocking program changes a registration entry file having an item of job manager reading data preventing the user from starting a job manager of Windows to close the input blocking program, the input blocking program changes a reading data of a safety mode (80, 101-103) of the registration entry file preventing the user from entering the safety mode (80, 101-103) to access a file, the input blocking program changes a reading data of a registration editing program preventing the user from starting the registration editing program so as to change the registration entry file, the input blocking program sets a secret code so as to change the registration entry file, the input blocking program sets a secret code to remove the input blocking program via inputting the secret code, and the upper frame is displayed when the input blocking program can not detect the built-in ID of the second input device (C, Q2) over a period of time.

8. A computer having a locking function, comprising:
a detecting tool (825, 1024) detecting a triggering signal; and
a receiving device (100) receiving the triggering signal and locking the computer accordingly.

9. A computer according to Claim 8 **characterized by** further comprising a second input device (C, Q2) electrically connecting to the computer, inputting the unlocking instruction and having a built-in ID to be identified by the input blocking program so as to accept the unlocking instruction, unlock the first input device (Q1) and remove the upper frame after recognizing the built-in ID unmistakably, wherein the detecting tool (825, 1024) is an input blocking program, the receiving device (100) is a first input device (Q1), the triggering signal is an input data of the first input device (Q1), the first input device (Q1) receives the input data and sets a locking instruction and an unlocking instruction, and the input blocking program recognizes the inputted locking instruction and locks the first input device (Q1) by displaying an upper frame to cover a previous frame originally in use, the second input device (C, Q2) is a cordless mouse, the built-in ID is one of a hardware ID of a dongle of the cordless mouse and a hardware ID of a MP3, and the unlocking instruction is accepted after the built-in ID is recognized unmistakably so as to unlock the first input device (Q1), the first input device (Q1) comprises one of a PS/2 keyboard and a PS/2 mouse; when the second input device (C, Q2) comprises one of a USB keyboard and a USB mouse, the built-in ID is a hardware ID of one of the USB keyboard and the USB mouse; when the second input device (C, Q2) comprises an external docking station electrically connected to the computer and input with the unlocking instruction, the computer further comprises a third input device electrically connected to the docking station; the third input device comprises one of a specific USB keyboard and a specific USB mouse, the input blocking program identifies the built-in ID, which is a hardware ID of one of the specific USB keyboard and the specific USB mouse, the computer further comprises a second input device (C, Q2) having a built-in ID to be identified by the input blocking program, when the computer is a local computer, the second input device (C, Q2) comprises an external network interface card (NIC) electrically connected to the local computer, and the unlocking instruction is inputted via one of a mouse and a keyboard of a remote computer, the unlocking instruction is received by the local computer via an internet, the built-in ID is a hardware ID of the NIC, the locking instruction is set as a "Ctrl" key plus a "1" key, the unlocking instruction is a hot key, the hot key is set as a "Ctrl" key and an "Alt" key plus a "8" key, the computer uses a data transmission control device having a remote control mode (80, 101-103) controlled by a security code and limiting a data transmission to and fro the computer so as to interfere with the second input device (C, Q2), when the second input device (C, Q2) is one of a PS/2 keyboard and a PS/2 mouse, the PS/2 keyboard and the PS/2 mouse are converted to a USB keyboard and a USB mouse respectively via a PS/2 to USB adaptor/converter, the computer further comprises a CPU having one of a 32 bit data bus and a 64 bit data bus, an arithmetic logic unit and an operating system, and the input blocking program changes a registration entry file of the operating system, causes the computer to be re-entered and keeps the relative settings before a restarting action of the computer.

10. A computer according to Claim 8 **characterized by** further comprising a connector having a detecting device, wherein the receiving device (100) is disposed on a PCB of the computer, the detecting tool (825, 1024) is the detecting device, the triggering signal is a manipulating signal generated when the connector undertakes a substantial manipulation, and locks the computer accordingly, and the manipulation signal is one of a separation signal and a combination signal, a manipulation of a pseudo separation and a pseudo combination is achieved by a control signal outputted by a secret code remote control, the connector has a detecting device, the separation signal is triggered by the detecting device when the connector engages a separation action, the receiving device (100) has a switch, the switch is one of an electronic switch remote controlled by a first secret code and a finger dialing switch controlled by a second secret code, the computer engages an open detection when one of the electronic switch and the finger dialing switch is turned on, the connector and one of a USB type A connector and a PS/2 connector is used to unlock the computer, an identification action is proceeded by a detection circuit, the detection circuit has two comparators, the receiving device (100) has a switch, the computer engages a close detection, which can be turned into an open detection latter, a first, a second and a third unlocking devices are used to unlock the computer, the first unlocking device uses a USB type A male connector electrically connecting a first terminal to one of a second and a third terminals of the switch and turned off, an identification action is proceeded by a detection circuit, the second unlocking device uses a USB type A male connector electrically connecting a first terminal to two out of three of a second, a third and a fourth terminals of the switch, an identification action is proceeded by a first detection circuit, the first detection circuit has two comparators, the third unlocking device uses a USB type A male connector electrically connecting the first terminal to the second, the third and fourth terminals of the connector, an identification action is proceeded by a second detection circuit, the second detection circuit has three comparator, and the PCB is one selected from a group consisting of a PCB having a PCI, a front case PCB, a PCB inside a power supply, a PCB inside a UPS, a PCB inside a USB device and a main board of the computer.
